# EUROPEAN PATENT SPECIFICATION

(11) **EP 3 127 687 B1**
(45) Date of publication and mention of the grant of the patent: **22.08.2018**
(21) Application number: 15773044.1
(22) Date of filing: 02.04.2015
(51) Int. Cl.: B29D 30/30, B60C 5/14, B29D 30/06

(54) **PNEUMATIC TIRE AND PNEUMATIC TIRE MANUFACTURING METHOD**
LUFTREIFEN UND VERFAHREN UND HERSTELLUNG EINES LUFTREIFENS
PNEU ET PROCÉDÉ DE FABRICATION DE PNEU

(30) Priority: 02.04.2014 JP 2014076099
(43) Date of publication of application: 08.02.2017
(73) Proprietor: Bridgestone Corporation, Tokyo 104-8340 (JP)
(72) Inventor: HIROKAWA, Yusuke, Tokyo 104-8340 (JP); CHIASHI, Hideyuki, Tokyo 104-8340 (JP)
(74) Representative: Lang, Johannes
(86) International application number: PCT/JP2015/001892
(87) International publication number: WO 2015/151528

(56) References cited:
- WO-A1-2008/059716
- JP-A- 2010 208 132

## Description

### TECHNICAL FIELD

This disclosure relates to a pneumatic tire and a method for manufacturing a pneumatic tire.

### BACKGROUND

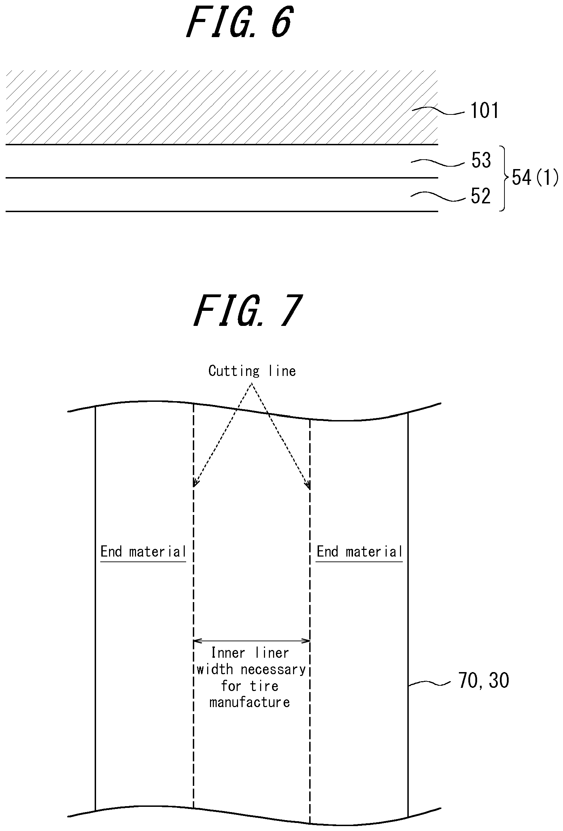

Conventionally, an inner liner for reducing air leakage from a tire has been manufactured by using rubber sheet. As materials of this rubber inner liner, rubber compositions containing butyle rubber or halogenated butyl rubber as main material have been used. In manufacture of this rubber inner liner, as illustrated in FIG. 7, an inner liner width necessary in tire manufacture has been cut out from a rubber sheet raw material. By using such manufacturing method, end material of both ends after cutting was recyclable unvulcanized rubber, and thus this end material could be utilized after recycling.

Recently, an inner liner using a resin film instead of the aforementioned rubber sheet has been developed. This is because that by using a resin film as material of the inner liner, it is possible to improve air barrier property and sufficiently reduce thickness of the inner liner.

However, this resin film had a problem of difficulty in recycling end material after the end material is cut out as illustrated in FIG. 7.

Regarding this problem, for example, PTL1 (WO2004110735A1) has suggested a method of forming rolled bodies from tubular films having corresponding to sizes of rim diameters, and perform cutting corresponding to a tire width size to form a tire component. According to this method, end material is not generated when producing tire components such as inner liner and the like.

### CITATION LIST

### Patent Literature

PTL 1: WO2004110735A1

Further methods for manufacturing a tire comprising an inner liner are disclosed in JP 2010-208132 A and WO 2008/059716 A1.

### SUMMARY

### (Technical Problem)

However, according to the method of PTL 1, there was a problem that a plurality of rolled bodies formed of different tubular films corresponding to the rim diameter have to be prepared, and that stock management of intermediates of tire components is complicated.

In view of this point, this disclosure is to provide a method for manufacturing a pneumatic tire without necessity of complicated stock management and without generation of end material when producing an inner liner, and a pneumatic tire manufactured with the method for manufacturing a pneumatic tire.

### (Solution to Problem)

The invention relates to a method for manufacturing a pneumatic tire according to claim 1 and to a pneumatic tire according to claim 8.

In order to solve the aforementioned problem, the method for manufacturing a pneumatic tire according to this disclosure, wherein an inner liner is arranged on an inner circumferential surface of a tire molded body, includes: a cutting process of cutting in a widthwise direction a strip-like resin film having a thermoplastic resin film layer, at a constant spacing in a longitudinal direction of the resin film; a joining process of joining uncut edges of a plurality of resin film pieces generated in the cutting process; and a process of arranging the inner liner generated in the joining process on the inner circumferential surface of the tire molded body. According to the method for manufacturing a pneumatic tire of this disclosure, it is possible to not generate end material when manufacturing an inner liner.

In the method for manufacturing a pneumatic tire of this disclosure, the resin film is preferably a laminate having the thermoplastic resin film layer and a thermoplastic elastomer layer. According to this configuration, it is possible to easily handle the resin film, improve the operability, and improve the durability of the inner liner.

In the method for manufacturing a pneumatic tire of according to claim 1 a width of the resin film is 100 mm or more. According to this configuration, it is possible to suppress vibration of the tire.

In the method for manufacturing a pneumatic tire of this disclosure, the width of the resin film is preferably 400 mm or more. According to this configuration, it is possible to further suppress vibration of the tire.

In the method for manufacturing a pneumatic tire of this disclosure, a joining width of the plurality of resin film pieces is preferably 0 mm or more and 300 mm or less. According to this configuration, it is possible to suppress disorder in ply implantation.

In the method for manufacturing a pneumatic tire of this disclosure, a joining width of the plurality of resin film pieces is preferably 0 mm or more and 5 mm or less. According to this configuration, it is possible to further suppress disorder in ply implantation.

In the method for manufacturing a pneumatic tire of this disclosure, a difference between the width of the thermoplastic elastomer layer and the thermoplastic resin film layer in the laminate is preferably no more than the joining width of the resin film pieces. According to this configuration, it is possible to suppress air leakage from the tire.

In the method for manufacturing a pneumatic tire of this disclosure, a ratio of the joining width to the width of the resin film is preferably 0 or more and 0.1 or less. According to this configuration, it is possible to suppress disorder in ply implantation.

In order to solve the aforementioned problem, the pneumatic tire according to this disclosure is obtained by the aforementioned method for manufacturing a pneumatic tire. According to the pneumatic tire of this disclosure, it is possible to not generate end material when manufacturing the inner liner.

In order to solve the aforementioned problem, the pneumatic tire according to this disclosure includes an inner liner, the inner liner having two or more joining portions extending in a tread widthwise direction, and including a thermoplastic resin film layer. According to the pneumatic tire of this disclosure, it is possible to not generate end material when manufacturing the inner liner.

### (Advantageous Effect)

According to this disclosure, it is possible to provide a method for manufacturing a pneumatic tire and a pneumatic tire manufactured via the method for manufacturing a pneumatic tire, without necessity of complicated stock management and without generation of end material when manufacturing an inner liner.

### BRIEF DESCRIPTION OF THE DRAWINGS

FIG. 1 illustrates a cross-sectional view of the pneumatic tire according to an embodiment of this disclosure;
FIG. 2 illustrates the flow of the manufacturing process of the pneumatic tire according to the first embodiment of this disclosure;
FIG. 3 illustrates the states before and after forming the inner liner via the method for manufacturing a pneumatic tire according to the first embodiment of this disclosure;
FIG. 4 illustrates the flow of the manufacturing process of the pneumatic tire according to the second embodiment of this disclosure;
FIG. 5 illustrates the states before and after forming the inner liner via the method for manufacturing a pneumatic tire according to the second embodiment of this disclosure;
FIG. 6 illustrates an enlarged cross-sectional view of the pneumatic tire according to the second embodiment of this disclosure; and
FIG. 7 illustrates a conventional manufacturing process of inner liner.

### DETAILED DESCRIPTION

Embodiments according to this disclosure is described by referring to the drawings in the following.

### (First embodiment)

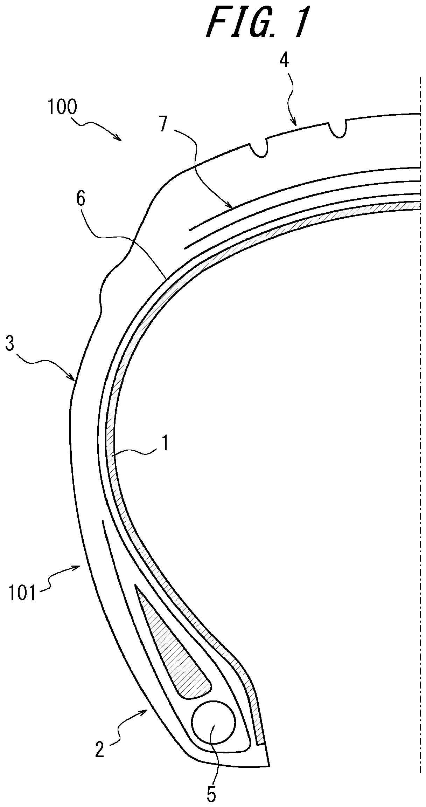

FIG. 1 illustrates a cross-sectional view of the pneumatic tire according to an embodiment of this disclosure. A pneumatic tire 100 of the present embodiment includes a tire molded body 101 and an inner liner 1, the tire molded body 101 having a carcass 6 and a belt 7, the carcass 6 including a pair of bead portions 2, a pair of sidewall portions 3 and a tread portion 4, the pair of sidewall portions 3 connected to a tire radial outer side of the bead portions 2, the tread portion 4 spanning between the sidewall portions 3, and toroidally extending across each portion between bead cores 5 embedded in the bead portions 2, the belt 7 formed of a plurality of belt layers disposed on the tire radial outer side of a crown portion of the carcass 6.

The inner liner 1 is formed of thermoplastic resin films having an adhesive layer on one side or both sides, which is not illustrated. As the material of the thermoplastic resin film layer, for example, polyamide based resin, polyvinylidene chloride based resin, polyester based resin, ethylene-vinyl alcohol copolymer based resin, etc. may be used. Among the above, the ethylene-vinyl alcohol copolymer (hereinafter referred to as "EVOH" for short) has an air permeability of 1/100 or less of the aforementioned butyl based rubber compositions for inner liner, and thus greatly improves internal pressure maintenance of the tire. Moreover, by reducing the thickness of the inner liner, it is possible to reduce the weight of the tire.

As illustrated in FIG. 1, this inner liner 1 is arranged on an inner surface of the tire molded body 101, and reduces leakage of the air filled inside the pneumatic tire 100 to the outer side of the tire.

The method for manufacturing a pneumatic tire according to the first embodiment of this disclosure is described in the following.

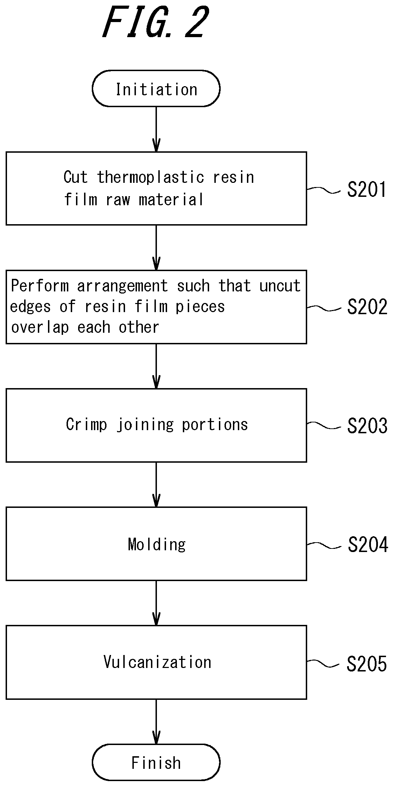

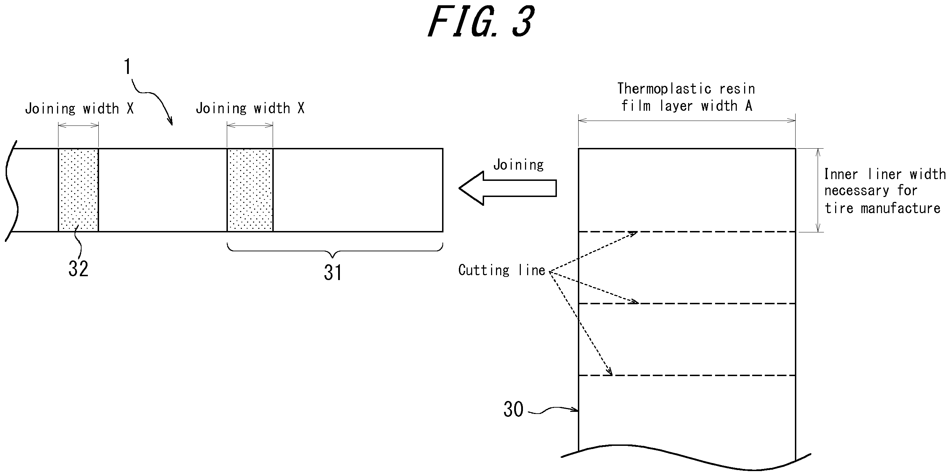

FIG. 2 illustrates the flow of the manufacturing process of the inner liner 1 constituting the pneumatic tire 100 according to an embodiment of this disclosure. Moreover, the right half of FIG. 3 illustrates the state where a thermoplastic resin film raw material 30, as a material of the inner liner 1, is expanded. The left half of FIG. 3 illustrates a state after the inner liner 1 is formed by cutting and crimping the thermoplastic resin film raw material 30. In the present embodiment, the thermoplastic resin film raw material 30 is formed by winding into a roll shape thermoplastic resin film having a width A as illustrated in the right half of FIG. 3. Here, the width A is preferably 100 mm or more, and more preferably 400 mm or more. Moreover, 500 mm is an optimum example for the width A. Here, the reason for setting the lower limit of the width A to 100 mm or 400mm is that if the width A of the thermoplastic resin film raw material 30 is too narrow, the number of joining portions of the inner liner 1 is increased, which adversely affects vibration, etc. Moreover, due to limitations in film manufacture, it is possible to further set a condition that the width A is 3000 mm or less or 1500 mm or less. In the method for manufacturing the pneumatic tire 100 of this disclosure, first, the thermoplastic resin film raw material 30 in the right half of FIG. 3 is cut in the widthwise direction at pitches of a constant spacing in the longitudinal direction (step S201). At this time, the cutting pitch is the width of the inner liner 1 corresponding to a widthwise periphery width of the manufactured tire. As illustrated in the right half of FIG. 3, the thermoplastic resin film raw material 30 is cut at pitches equal to the width necessary for the inner liner 1, and thus no end material is generated. Here, the resin film of this disclosure is the thermoplastic resin film raw material 30 in the present embodiment.

Next, in the present embodiment, a plurality of resin film pieces 31 generated via cutting are arranged as illustrated in the left half of FIG. 3, such that the uncut edges overlap each other at a joining width X (step S202). The thermoplastic resin film raw material 30 has an adhesive layer on one side or both sides, and as illustrated in the left half of FIG. 3, can be crimped by arranging the same in a manner overlapping each other at a joining width X and then performing pressing (step S203). Here, the joining width X is preferably 0 mm or more and 300 mm or less, and more preferably 5 mm or less. An optimum example of the joining width X is 5 mm. Further, when the joining width is 0 mm, joining is performed on edge surfaces. Further, the reason to set the upper limit of the joining width X to 300 mm is that if being 300 mm or more, the ratio of the overlapping part of the thermoplastic resin film layer in the inner liner 1 is increased, and the non-overlapping part is locally expanded when subjected to vulcanization, etc. Due to this local expansion, there is a risk of disorder in ply implantation. Moreover, from the viewpoint of suppressing disorder in ply implantation, the joining width X is more preferably less than 5 mm. Here, it is possible to use a thermoplastic resin film raw material 30 without an adhesive layer previously, and apply an adhesive in a step earlier than a crimping step. Moreover, it is possible to perform joining via a process without using an adhesive.

The ratio of the joining width X to the width A of the thermoplastic resin film raw material 30 is preferably 0 or more and 0.1 or less. Moreover, an optimum example for the X/A ratio is 0.01. This is because that if the ratio of the joining width X to the width A of the thermoplastic resin film raw material 30 exceeds 0.1, the problem of disorder in ply implantation probably occurs.

Next, in the present embodiment, molding (step S204) and vulcanization (step S205) of the inner liner 1 after joining in the left half of FIG. 3 is performed. Molding is a process for stacking the inner liner 1, the carcass 6, the belt 7, the tread portion 4, etc. on a molding drum to mold an unvulcanized tire. Vulcanization is a process to charge the molded unvulcanized tire into a mold, perform expansion and deformation by shaping the same, pressing the same onto a molding surface of the mold, and simultaneously performing vulcanization by heating the same, to obtain a tire product.

In this way, as illustrated in the left half of FIG. 3, the inner liner 1 of the pneumatic tire 100, which is manufactured by joining a plurality of resin film pieces 31, has a plurality of joining portions 32 extending in a tread widthwise direction. Furthermore, since the tire circumferential length of the resin film pieces 31 is equal to the width A of the thermoplastic resin film, the joining portions 32 are arranged at a constant spacing in the tire circumferential direction. Note that in the case where circumferential edges of a part of the resin film pieces 31 are cut in order to adjust the circumferential length of the inner liner, spacing between the joining portions 32 of this part is shortened.

In the present embodiment, the inner liner 1 is formed of a single thermoplastic resin film layer including an adhesive layer on one side or both sides; however, this disclosure is not limited to such modes. After subjecting the thermoplastic resin film to joining as illustrated in FIG. 3, it is possible to produce the inner liner 1 by pasting a thermoplastic elastomer raw material produced via a conventional method.

### (Second embodiment)

The configuration of the pneumatic tire according to the second embodiment is as illustrated in FIG. 1. Namely, the method for manufacturing the inner liner 1 is merely different from the first embodiment, and thus description in detail is omitted.

The inner liner 1 is formed of a thermoplastic resin film layer 52 having an adhesive layer on one side or both sides, which is not illustrated, and a thermoplastic elastomer layer 53.

The method for manufacturing a pneumatic tire 100 according to the second embodiment of this disclosure is described in the following.

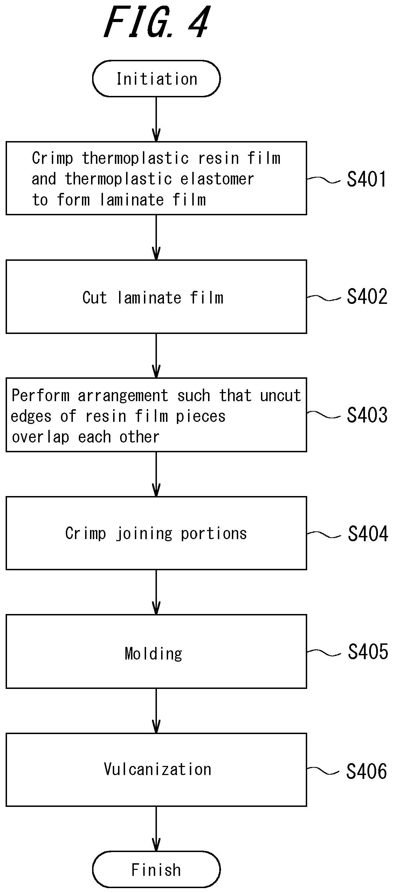

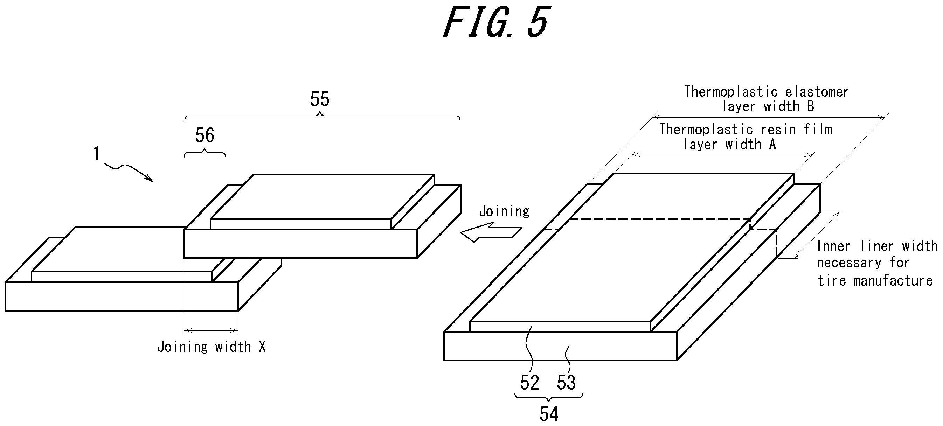

FIG. 4 shows the flow of the manufacturing process of the inner liner 1 constituting the pneumatic tire 100 according to an embodiment of this disclosure. Moreover, FIG. 5 illustrates in the right half a laminate film 54 as a material of the inner liner 1. The left half of FIG. 5 shows a state after the inner liner 1 is formed by cutting and pressing the laminate film 54. In the present embodiment, as illustrated in the right half of FIG. 5, the laminate film 54 is formed by pasting a thermoplastic resin film layer 52 having a width A and a thermoplastic elastomer layer 53 having a width B satisfying B ≥ A. In this way, by pasting the thermoplastic resin film layer 52 and the thermoplastic elastomer layer 53, it is possible to easily handle the laminate film 54 (resin film), improve the operability, and improve the durability of the inner liner 1. Here, it is more preferable that B > A. If B > A, it is unnecessary to adapt the width A of the thermoplastic resin film layer 52 with the width B of the thermoplastic elastomer layer 53, and thus slitting work on a single thermoplastic resin film layer 52 can be omitted. Therefore, it is possible to suppress generation of end material of the thermoplastic resin film layer 52. Here, the width A is preferably 100 mm or more, and more preferably 400 mm or more. Moreover, 500 mm is an optimum example for the width A. Here, the reason for setting the lower limit of the width A to 100 mm or 400mm is that if the width A of the laminate film 54 is too narrow, the number or joining portions of the inner liner 1 is increased, which adversely affects vibration, etc. Moreover, due to limitations in film manufacture, it is possible to further set a condition that the width A is 3000 mm or less or 1500 mm or less. Moreover, the difference between the width B and the width A is preferably less than the joining width X. This is because that if the difference (B-A) between the width B and the width A is larger than the joining width X, positions where the thermoplastic resin film layer 52 does not exist are generated and the internal pressure maintenance is deteriorated. The method for manufacturing the pneumatic tire 100 according to the present embodiment is: first, as illustrated in the right half of FIG. 5, paste the thermoplastic resin film layer 52 with the thermoplastic elastomer layer 53 to produce the laminate film 54 (step S401). At this time, it is preferable to perform pasting in the state where the widthwise centers of the thermoplastic resin film layer 52 and the thermoplastic elastomer layer 53 are in accordance. Next, cut the laminate film 54 produced in step S401 in the widthwise direction at pitches of a constant spacing in the longitudinal direction (step S402). The cutting pitch at this time is the width of the inner liner 1 in the tire width direction necessary for tire manufacture. As illustrated in the right half of FIG. 5, the laminate film 54 is cut at pitches equal to the width necessary for the inner liner 1, and thus no end material is generated. Here, the resin film of this disclosure is the laminate film 54 in the present embodiment.

Next, in the present embodiment, a plurality of laminate film pieces 55 generated via cutting are arranged as illustrated in the left half of FIG. 5, such that the uncut edges overlap each other at a joining width X (step S403). In the present embodiment, the laminate film 54 has an adherent layer on both sides, and as illustrated in the left half of FIG. 5, can be crimped by arranging the same in a manner overlapping each other at a joining width X and then performing pressing (step S404). Here, the joining width X is preferably 0 mm or more and 300 mm or less, and more preferably 5 mm or less. An optimum example of the joining width X is 5 mm. Here, when the joining width is 0 mm, joining is performed on edge surfaces. Further, the reason to set the upper limit of the joining width X to 300 mm is that if being 300 mm or more, the ratio of the overlapping part of the thermoplastic resin film layer in the inner liner 1 is increased, and the non-overlapping part is locally expanded when subjected to vulcanization, etc. Due to this local expansion, there is a risk of disorder in ply implantation. Moreover, from the viewpoint of suppressing disorder in ply implantation, the joining width X is more preferably less than 5 mm. Here, in the case of a laminate film 54 without an adherent layer previously, it is possible as well to apply an adherent in a step earlier than a crimping step. Moreover, it is possible to perform joining via a process without using an adherent.

The ratio of the joining width X to the width A of the thermoplastic resin film layer 52 is preferably 0 or more and 0.1 or less. Moreover, an optimum example for the X/A ratio is 0.01. This is because that if the ratio of the joining width X to the width A of the thermoplastic resin film layer 52 exceeds 0.1, the problem of disorder in ply implantation probably occurs.

Next, in the present embodiment, molding (step S405) and vulcanization (step S406) of the inner liner 1 after joining in the left half of FIG. 5 is performed. Molding is a process for stacking the inner liner 1, the carcass 6, the belt 7, the tread portion 4, etc. on a molding drum to mold an unvulcanized tire. Vulcanization is a process to charge the molded unvulcanized tire into a mold, perform expansion and deformation by shaping the same, pressing the same onto a molding surface of the mold, and simultaneously performing vulcanization by heating the same, to obtain a tire product. The layer structure of the pneumatic tire 100 produced via vulcanization is illustrated in FIG. 6. The thermoplastic resin film layer 52 is arranged on the innermost side and functions as a barrier layer. Further, by sandwiching the thermoplastic elastomer layer 53 between the thermoplastic resin film layer 52 and the tire molded body 101, even if the carcass cords inside the tire molded body 101 move during travelling, distortion is unlikely to be generated in the thermoplastic resin film layer 52. Therefore, it is possible to improve the durability of the inner liner 1. Further, it is possible to arrange the thermoplastic elastomer layer 53 on the innermost side.

In this way, as illustrated in the left half of FIG. 5, the inner liner 1 of the pneumatic tire 100, which is manufactured by joining a plurality of laminate film pieces 55, has a plurality of joining portions 56 extending in a tread widthwise direction. Furthermore, since the tire circumferential length of the laminate film pieces 55 is equal to the width of the laminate resin film, the joining portions 56 are arranged at a constant spacing in the tire circumferential direction. Note that in the case where tire circumferential edges of a part of the laminate film pieces 55 are cut in order to adjust the circumferential length of the inner liner, spacing between the joining portions 56 of this part is shortened.

### EXAMPLES

In order to certify the effect of this disclosure, the tires of Examples 1 to 23 and Comparative Examples 1, 2 were produced experimentally. Examples 1 to 11 correspond to the pneumatic tire according to the first embodiment of this disclosure (example 2 is not part of the invention), and Examples 12 to 23 correspond to the pneumatic tire according to the second embodiment of this disclosure (example 13 is not part of the invention). This disclosure is not limited to these examples.

The correlation among the film width A of the thermoplastic resin film raw material 30 as a material of the inner liner 1, the joining width X in the joining process, and various properties of the tire products is described based on experimental data.

Table 1 shows the vibration level, the end material disposal amount and the ply cord spacing at non-joining portions when varying the film width A of the thermoplastic resin film raw material 30 and the joining width X in the joining process. The following are examples corresponding to the pneumatic tire according to the first embodiment, and comparative examples to be compared with them.

**[Table 1]**

| | Joining width X mm | Resin film width A mm | X/A | Vibration | End material disposal amount | Ply cord spacing of non-joining portions |
|---|---|---|---|---|---|---|
| Comparative Example 1 | Conventional method | | - | 4 | 100 | 100 |
| Example 1 | 310 | 700 | 0.44 | 2 | 0 | 180 |
| Example 2 | 5 | 90 | 0.06 | 2 | 0 | 105 |
| Example 3 | 0 | 500 | 0.00 | 5 | 0 | 100 |
| Example 4 | 1 | 100 | 0.01 | 4 | 0 | 100 |
| Example 5 | 3 | 200 | 0.02 | 4 | 0 | 100 |
| Example 6 | 5 | 300 | 0.02 | 4 | 0 | 100 |
| Example 7 | 10 | 400 | 0.03 | 5 | 0 | 100 |
| Example 8 | 50 | 500 | 0.10 | 4 | 0 | 110 |
| Example 9 | 100 | 500 | 0.20 | 4 | 0 | 120 |
| Example 10 | 200 | 600 | 0.33 | 4 | 0 | 140 |
| Example 11 | 300 | 1000 | 0.30 | 3 | 0 | 140 |

Further, the "conventional method" of Comparative Example 1 in Table 1 refers to a tire produced via a manufacturing method of cutting both widthwise edges of the film, as illustrated in FIG. 7. A tire according to this conventional method does not have a plurality of joining portions on the inner liner 1 and thus has no problem with evaluation on "vibration", but has a larger disposal amount of end material.

Evaluation on "vibration" in Table 1 was performed by mounting 4 experimental tires onto an automobile of sedan type, and traveling the automobile on a riding comfort evaluation test course. With respect to each tire, a driver traveled at a speed of 60 km/h, and evaluated the degree of vibration felt by himself/herself with a rating of 1 to 5 points. Here, the evaluation was performed by two professional drivers, and the rating in Table 1 used average values evaluated by the two drivers. Further, the rating standard is that 3 points or more represents a vibration level felt by the driver without problem, and less than 3 points represents obvious discomfort felt by the driver.

The value of "end material disposal amount" in Table 1 shows disposal amount of end material in each example, with the disposal amount of end material of the conventional method as shown in Comparative Example 1 as 100. Table 1 shows the manufacturing methods other than the conventional method do not generate end material at all.

The ply cord spacing of non-joining portions in Table 1 shows the spacing between ply cords in the non-joining portions, with the spacing of ply cords of carcass plies in the joining portions as 100. Here, the reason that the values in a part of the examples exceeds 100, with the conventional method as 100, is that the joining portions of the inner liner have a larger thickness as compared to the non-joining portions. For example, considering vulcanization of step S205, in the non-joining portions, at which the inner liner have a lower thickness, the degree of expansion is greater, distortion is generated in the implanted plies, and the spacing is relatively widened.

The result in Table 1 is explained in the following. First, the vibration evaluation of Examples 1 and 2 is less than 3 points, i.e., the driver felt obvious discomfort. In Example 1, the value of X/A is as large as 0.44, and the ratio of the joining portions in the inner liner 1 is nearly a half. Due to this configuration, it is considered that the driver strongly feels as a vibration the difference between the joining portions and the non-joining portions in the inner liner 1, and thus feels discomfort. In Example 2, although the ratio of the joining portions in the inner liner is as low as 0.1 or less, since the resin film width A is as small as less than 100 mm, the number of joining portions per tire is high. Therefore, the frequency that the driver feels the borderlines of joining portions and non-joining portions in the inner liner becomes high, leading to uncomfortable feelings.

In Example 2, although the joining width X is suppressed to 5 mm, i.e., a relatively small value, since the film width A is as short as 90 mm, the result of vibration evaluation is as poor as 2 points. Therefore, the film width A of the thermoplastic resin film raw material 30 is set to 100 mm or more, which is longer than 90 mm.

According to the result of Examples 3 and 7, it is understood that if the film width A becomes 400 mm or more, the result of vibration evaluation becomes 5 points, i.e., the full point. Therefore, it is understood that the film width A is more preferably 400 mm or more.

According to the result of Example 1, if the joining width X is more than 300 mm, the ply cord spacing becomes a great value of 180. Therefore, the joining width X is preferably 0 mm or more and 300 mm or less.

According to the result of Examples 3 to 6, if the joining width X is 5 mm or less, there is not variation in the ply spacing of the non-joining portions. Therefore, the joining width X is more preferably set to 0 mm or more and 5 mm or less.

On the other hand, according to Examples 9 to 11, even when the film width A is 400 mm or more, if the value of X/A is more than 0.1, the ply cord spacing of the non-joining portion becomes more than 100. This is because that if the ratio of joining portions in the tire circumference is increased, an effect of joining portions having a higher thickness is exhibited, and thus distortion is generated during ply implantation in non-joining portions having a lower thickness. Therefore, the ratio X/A of the joining width X and the film width A is preferably 0.1 or less.

Next, the correlation of the film widths A, B of the thermoplastic resin film layer 52 and the thermoplastic elastomer layer 53 for constituting the laminate film 54 as a material of the inner liner 1 according to the present embodiment, the joining width X in the joining process, and various properties of the tire product is described based on experimental data.

Table 2 shows the vibration level, the end material disposal amount, and the ply cord spacing and the air retention at non-joining portions, when varying the film width A, B of the thermoplastic resin film layer 52 and the thermoplastic elastomer layer 53, and the joining width X in the joining process. The following are examples corresponding to the pneumatic tire according to the second embodiment, and comparative examples to be compared with them.

**[Table 2]**

| | Joining width X mm | Resin film width A mm | X/A | Elastomer width B - Resin film width A mm | Vibration | End material disposal amount | Ply cord spacing of non-joining portions | Air retention |
|---|---|---|---|---|---|---|---|---|
| Comparative Example 2 | Conventional method | | | | 4 | 100 | 100 | 100 |
| Example 12 | 310 | 700 | 0.44 | 100 | 2 | 0 | 180 | 70 |
| Example 13 | 5 | 90 | 0.06 | 2 | 2 | 0 | 105 | 100 |
| Example 14 | 5 | 500 | 0.01 | 10 | 5 | 0 | 100 | 120 |
| Example 15 | 0 | 500 | 0.00 | 0 | 5 | 0 | 100 | 100 |
| Example 16 | 1 | 100 | 0.01 | 0.5 | 4 | 0 | 100 | 100 |
| Example 17 | 3 | 200 | 0.02 | 1 | 4 | 0 | 100 | 100 |
| Example 18 | 5 | 300 | 0.02 | 2 | 4 | 0 | 100 | 100 |
| Example 19 | 10 | 400 | 0.03 | 5 | 5 | 0 | 100 | 100 |
| Example 20 | 50 | 500 | 0.10 | 10 | 4 | 0 | 110 | 100 |
| Example 21 | 100 | 500 | 0.20 | 10 | 4 | 0 | 120 | 90 |
| Example 22 | 200 | 600 | 0.33 | 10 | 4 | 0 | 140 | 80 |
| Example 23 | 300 | 1000 | 0.30 | 10 | 4 | 0 | 140 | 80 |

The method for evaluating the "vibration" in Table 2 is the same as Table 1.

The value of "air retention" in Table 2 shows reduction amount of air pressure in each example, with the reduction amount of air pressure of the conventional method as shown in Comparative Example 2 as 100, where a larger value shows a reduced air pressure.

The results in Table 2 is explained in the following. First, the vibration evaluation of Examples 12 and 13 is less than 3 points, i.e., the driver felt obvious discomfort. In Example 12, the value of X/A is as large as 0.44, and the ratio of the joining portions in the inner liner 1 is nearly a half. Due to this configuration, it is considered that the driver strongly feels as a vibration the difference between the joining portions and the non-joining portions in the inner liner 1, and thus feels discomfort. In Example 13, although the ratio of the joining portions in the inner liner is as low as 0.1 or lower, since the resin film width A is as small as less than 100 mm, the number of joining portions per tire is high. Therefore, the frequency that the driver feels the borderlines of joining portions and non-joining portions in the inner liner becomes high, leading to uncomfortable feelings.

In Example 13, although the joining width X is suppressed to 5 mm, i.e., a relatively small value, since the film width A is as short as 90 mm, the result of vibration evaluation is as poor as 2 points. Therefore, the film width A of the thermoplastic resin film layer 52 is set to 100 mm or more, which is longer than 90 mm.

According to the result of Examples 15 and 19, it is understood that if the film width A becomes 400 mm or more, the result of vibration evaluation becomes 5 points, i.e., the full point. Therefore, it is understood that the film width A is more preferably 400 mm or more.

According to the result of Example 12, if the joining width X is more than 300 mm, the ply cord spacing becomes a great value of 180. Therefore, the joining width X is preferably 0 mm or more and 300 mm or less.

According to the result of Examples 15 to 18, if the joining width X is 5 mm or less, there is not variation in the ply spacing and air retention of the non-joining portions. Therefore, it is understood that the joining width X is more preferably set to 0 mm or more and 5 mm or less.

According to the result of Example 14, when the difference (B-A) between the width B of the thermoplastic elastomer layer 53 and the width A of the thermoplastic resin film layer 52 is larger than the joining width X, the air retention is increased. This is because that positions where the thermoplastic resin film layer 52 does not exist are generated and the internal pressure maintenance is deteriorated. Therefore, (B-A) is preferably less than the joining width X.

On the other hand, according to Examples 21 to 23, even when the film width A is 400 mm or more, if the value of X/A is more than 0.1, the ply cord spacing of the non-joining portion becomes more than 100. This is because that if the ratio of joining portions in the tire circumference is increased, an effect of joining portions having a higher thickness is exhibited, distortion is generated during ply implantation in non-joining portions having a lower thickness, and the ply cord spacing is increased. Therefore, the ratio X/A of the joining width X and the film width A is preferably 0.1 or less.

Although this disclosure is described based on each drawing and example, note that a skilled person can easily perform various variation or modification based on this disclosure. Therefore, note that such variation or modification is inclusive in the scope of this disclosure. For example, it is possible to perform rearrangement as long as there is no logical inconsistence in functions, etc. included in each component and each process, and it is possible to combine a plurality of components or processes into one, or divide one of them into a plurality. Note that the scope of this disclosure is inclusive of the above as well.

### REFERENCE SIGNS LIST

- 1: inner liner
- 2: bead portion
- 3: sidewall portion
- 4: tread portion
- 5: bead core
- 6: carcass
- 7: belt
- 30: thermoplastic resin film raw material (resin film)
- 31: resin film piece
- 32: joining portion
- 52: thermoplastic resin film layer
- 53: thermoplastic elastomer layer
- 54: laminate film (resin film)
- 55: laminate film piece (resin film piece)
- 56: joining portion
- 70: rubber sheet
- 100: pneumatic tire
- 101: tire molded body

## Claims

1. A method for manufacturing a pneumatic tire (100), wherein an inner liner (1) is arranged on an inner circumferential surface of a tire molded body (101), comprising:
a cutting process of cutting in a widthwise direction a strip-like resin film (30, 54) having a thermoplastic resin film layer, at a constant spacing in a longitudinal direction of the resin film (30, 54);
a joining process of joining uncut edges of a plurality of resin film pieces (31, 55) generated in the cutting process; and
a process of arranging the inner liner (1) generated in the joining process on the inner circumferential surface of the tire molded body (101), **characterized in that** a width of the resin film (30, 54) is 100 mm or more.

2. The method for manufacturing a pneumatic tire according to claim 1, wherein: the resin film (30, 54) is a laminate having the thermoplastic resin film layer and a thermoplastic elastomer layer.

3. The method for manufacturing a pneumatic tire according to claim 1 or 2, wherein: a width of the resin film (30, 54) is 400 mm or more.

4. The method for manufacturing a pneumatic tire according to any one of claims 1 to 3, wherein: a joining width of the plurality of resin film pieces (31, 55) is 0 mm or more and 300 mm or less.

5. The method for manufacturing a pneumatic tire according to any one of claims 1 to 4, wherein: a joining width of the plurality of resin film pieces (31, 55) is 0 mm or more and 5 mm or less.

6. The method for manufacturing a pneumatic tire according to claim 2, wherein: a difference between the width of the thermoplastic elastomer layer and the thermoplastic resin film layer in the laminate is no more than the joining width of the resin film pieces (31, 55).

7. The method for manufacturing a pneumatic tire according to any one of claims 1 to 6, wherein: a ratio of the joining width of the resin film pieces (31, 55) to the width of the resin film (30, 54) is 0 or more and 0.1 or less.

8. A pneumatic tire (100) obtained by the method for manufacturing a pneumatic tire according to any one of claims 1 to 7.

## Patentansprüche

1. Verfahren zur Herstellung eines Luftreifens (100), wobei eine Innenauskleidung (1) auf einer Innenumfangsoberfläche eines Reifen-Formkörpers (101) angeordnet ist, umfassend:
einen Schneideprozess eines in einer Richtung der Breite nach Schneidens eines streifenähnlichen Harzfilms (30, 54) mit einer thermoplastischen Harzfilmschicht bei einem konstanten Abstand in einer longitudinalen Richtung des Harzfilms (30, 54);
einen Fügeprozess eines Aneinanderfügens von ungeschnittenen Kanten einer Vielzahl von in dem Schneideprozess erzeugten Harzfilmstücken (31, 55); und
einen Prozess eines Anordnens der in dem Fügeprozess erzeugten Innenauskleidung (1) auf der Innenumfangsoberfläche des Reifen-Formkörpers (101),
**dadurch gekennzeichnet, dass** eine Breite des Harzfilms (30, 54) 100 mm oder mehr beträgt.

2. Verfahren zur Herstellung eines Luftreifens gemäß Anspruch 1, wobei: der Harzfilm (30, 54) ein Laminat mit der thermoplastischen Harzfilmschicht und einer thermoplastischen Elastomerschicht ist.

3. Verfahren zur Herstellung eines Luftreifens gemäß Anspruch 1 oder 2, wobei: eine Breite des Harzfilms (30, 54) 400 mm oder mehr beträgt.

4. Verfahren zur Herstellung eines Luftreifens gemäß irgendeinem der Ansprüche 1 bis 3, wobei: eine Fügebreite der Vielzahl von Harzfilmstücken (31, 55) 0 mm oder mehr und 300 mm oder weniger beträgt.

5. Verfahren zur Herstellung eines Luftreifens gemäß irgendeinem der Ansprüche 1 bis 4, wobei: eine Fügebreite der Vielzahl von Harzfilmstücken (31, 55) 0 mm oder mehr und 5 mm oder weniger beträgt.

6. Verfahren zur Herstellung eines Luftreifens gemäß Anspruch 2, wobei: eine Differenz zwischen der Breite der thermoplastischen Elastomerschicht und der thermoplastischen Harzfilmschicht in dem Laminat nicht mehr als die Fügebreite der Harzfilmstücke (31, 55) beträgt.

7. Verfahren zur Herstellung eines Luftreifens gemäß irgendeinem der Ansprüche 1 bis 6, wobei: ein Verhältnis der Fügebreite der Harzfilmstücke (31, 55) zu der Breite des Harzfilms (30, 54) 0 oder mehr und 0,1 oder weniger beträgt.

8. Luftreifen (100), erhalten durch das Verfahren zur Herstellung eines Luftreifens gemäß irgendeinem der Ansprüche 1 bis 7.

## Revendications

1. Un procédé de fabrication d'un pneumatique (100), dans lequel un chemisage intérieur (11) est disposé sur une surface circonférentielle intérieure d'un corps moulé de pneu (101), comprenant :
un processus de découpe, pour la découpe dans une direction en largeur d'un film de résine semblable à une bande (30, 54) possédant une couche de film de résine thermoplastique, avec un espacement constant dans une direction longitudinale du film de résine (30, 54) ;
un processus de liaison, pour la liaison de bords non découpés d'une pluralité de pièces de film de résine (31, 55) générées lors du processus de découpe ; et
un processus de mis en place du chemisage intérieur (1) généré au processus de liaison sur la surface circonférentielle intérieure du corps moulé de pneu (101),
**caractérisé en ce qu'**une largeur du film de résine (30, 54) est de 100 mm ou plus.

2. Le procédé de fabrication d'un pneumatique selon la revendication 1, dans lequel : le film de résine (30, 54) est un stratifié comportant la couche de film de résine thermoplastique et une couche élastomère thermoplastique.

3. Le procédé de fabrication d'un pneumatique selon la revendication 1 ou 2, dans lequel : une largeur du film de résine (30, 54) est de 400 mm ou plus.

4. Le procédé de fabrication d'un pneumatique selon l'une des revendications 1 à 3, dans lequel : une largeur de liaison de la pluralité de pièces de film de résine (31, 55) est de 0 mm ou plus et de 300 mm ou moins.

5. Le procédé de fabrication d'un pneumatique selon l'une des revendications 1 à 4, dans lequel : une largeur de liaison de la pluralité de pièces de film de résine (31, 55) est de 0 mm ou plus et de 5 mm ou moins.

6. Le procédé de fabrication d'un pneumatique selon la revendication 2, dans lequel : une différence entre la largeur de la couche d'élastomère thermoplastique et la couche de film de résine thermoplastique du stratifié n'est pas supérieure à la largeur de liaison des pièces de film de résine (31, 55).

7. Le procédé de fabrication d'un pneumatique selon l'une des revendications 1 à 6, dans lequel : un ratio entre la largeur de liaison des pièces de film de résine (31, 55) et la largeur du film de résine (30, 54) est de 0 ou plus et de 0,1 ou moins.

8. Un pneumatique (100) obtenu par le procédé de fabrication d'un pneumatique selon l'une des revendications 1 à 7.
